Europäisches Patentamt

European Patent Office

Office européen des brevets

(11) Veröffentlichungsnummer: **0 346 323 B1**

(12)
# EUROPÄISCHE PATENTSCHRIFT

(45) Veröffentlichungstag der Patentschrift: **19.02.92**

(21) Anmeldenummer: **87902039.4**

(22) Anmeldetag: **03.03.87**

(86) Internationale Anmeldenummer:
**PCT/DE87/00089**

(87) Internationale Veröffentlichungsnummer:
**WO 88/06550 (07.09.88 88/20)**

(51) Int. Cl.⁵: **B64C 31/02**, B64C 9/32

(54) **STEUERVORRICHTUNG FÜR HÄNGEGLEITER.**

(43) Veröffentlichungstag der Anmeldung:
**20.12.89 Patentblatt 89/51**

(45) Bekanntmachung des Hinweises auf die Patenterteilung:
**19.02.92 Patentblatt 92/08**

(84) Benannte Vertragsstaaten:
**AT CH DE FR GB IT LI**

(56) Entgegenhaltungen:
**FR-A- 1 449 983**
**FR-A- 2 535 285**

(73) Patentinhaber: **KECUR, Josef**
**Obschwarzbach 8**
**W-5603 Wülfrath(DE)**

(72) Erfinder: **KECUR, Josef**
**Obschwarzbach 8**
**W-5603 Wülfrath(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg(DE)**

## Beschreibung

### Technisches Gebiet

Die Erfindung betrifft eine Steuervorrichtung für Hängegleiter, bei welchem im Bereich der Tragflächenenden des Hängegleiters Klappen jeweils längs einer quer zur Flugrichtung verlaufenden vorderen Klappenlängsseite schwenkbar an der Tragfläche angebracht und über ein Stellzeug verschwenkbar sind, das an der hinteren Längsseite der Klappe angreift.

### Zugrundeliegender Stand der Technik

Bei einem Hängegleiter hängt der Flugzeugführer in einem Trapez unter den Tragflächen. Er startet durch Anlaufen, üblicherweise auf einem Berg. Gelenkt wird der Hängegleiter dadurch, daß der Flugzeugführer sein Gewicht nach vorn oder hinten oder nach rechts oder links verlagert und dadurch die Tragflächen um die Nickachse oder um die Rollachse neigt. Hängegleiter bestehen üblicherweise aus einem mit Stoff bespannten, zusammenlegbaren leichten Gestell.

Solche Hängegleiter werden in großem Umfange als Sportgeräte benutzt. Bei der Entwicklung solcher Hängegleiter wurde der Gleitwinkel durch entsprechende Auslegung der Tragflächen stark verkleinert. Das Verhältnis der zurückgelegten Strecke zu der zugehörigen Höhendifferenz bei ruhiger Luft, die Gleitzahl, wurde immer weiter vergrößert. Es hat bei guten Hängegleitern beispielsweise den Wert 12. Aus einer Höhe von 10 m fliegt der Hängegleiter dann noch 120 m weit. Diese an sich wünschenswerte Eigenschaft des Hängegleiters kann jedoch zu gefährlichen Situationen führen, wenn in der Flugbahn ein Hindernis auftaucht, dem der Flugzeugführer aus irgendeinem Grunde nicht seitlich ausweichen kann. Der Flugzeugführer kann dann den Hängegleiter nicht schnell genug herunterbekommen. Dies ist in der Praxis schon die Ursache für schwerwiegende Unfälle gewesen, bei denen Hängegleiter gegen Bäume, Felswände oder Hochspannungsleitungen geflogen sind.

Hängegleiter sind Segelflugzeuge. Um Höhe zu gewinnen, suchen sie Aufwinde (Thermik) auszunutzen. Zu diesem Zweck kreisen sie in einem Aufwindbereich. Das Kreisen bedingt aber bei dem üblichen Lenkverfahren, daß die Tragflächen durch Gewichtsverlagerung des Flugzeugführers um die Rollachse geneigt werden. Durch diese Neigung der Tragflächen wird jedoch die dem Aufwind ausgesetzte wirksame Fläche der Tragflächen vermindert. Der Aufwind wird dadurch nicht optimal ausgenutzt.

Eine weitere gefährliche Situation ist ein Strömungsabriß. Ein solcher tritt ein, wenn die Geschwindigkeit des Hängegleiters zu gering wird. Es gleicht sich dann der Unterdruck auf der Oberseite der Tragflächen und der Überdruck auf der Unterseite der Tragflächen aus, so daß der Auftrieb wegfällt.

Durch die FR-A-1 449 983 ist ein Flugzeug mit flexibler, dreieckiger Tragfläche bekannt, bei welchem an den hinteren Kanten der Tragflächen Querruder angebracht sind. Diese Querruder sind dort starre Körper und an je einer mit der flexiblen Tragfläche verbundenen Lagerplatte angelenkt.

Durch die FR-A1-2 535 285 ist ein Ultraleichtflugzeug mit Querrudern bekannt. Das Querruder sitzt, wie üblich, an der hinteren Kante der Tragfläche und wird über ein Zugseil betätigt. An dem Querruder ist senkrecht zu dessen Fläche eine kleine Achse angebracht, an deren Ende das Zugseil angreift. Elastische Glieder halten das Querruder in seiner neutralen Stellung. Bei einer anderen Ausführung der FR-A1-2 535 285 greift das Zugseil an einer Längsstrebe der Tragfläche an. Die Längsstrebe wird durch den Zug des Zugseils elastisch verformt und verformt damit die gesamte Tragfläche.

Die Querruder werden in üblicher Weise gegensinnig betätigt. Dadurch wird das Flugzeug in eine Schräglage gebracht, um eine Kurve zu fliegen. Eine Auslenkung der starren Querruder beeinflußt sofort in starkem Maße das Profil der Tragfläche und damit den Auftrieb.

### Offenbarung der Erfindung

Der Erfindung liegt die Aufgabe zugrunde, eine Steuervorrichtung für Hängegleiter zu schaffen, welche bei Bedarf ein schnelles Sinken des Hängegleiters ermöglicht.

Der Erfindung liegt weiter die Aufgabe zugrunde, eine Steuervorrichtung für Hängegleiter zu schaffen, welche eine optimale Ausnutzung von Aufwinden gestattet, wenn der Hängegleiter in einem Aufwindgebiet kreisen muß.

Eine weitere Aufgabe der Erfindung besteht darin, Mittel vorzusehen, durch die einem Strömungsabriß entgegengewirkt werden kann.

Die Steuervorrichtung soll dabei die Flug- und Auftriebseigenschaften des Hängegleiters nicht oder möglichst wenig beeinträchtigen.

Erfindungsgemäß werden diese Aufgaben dadurch gelöst, daß

(a) die Klappen auf der Oberfläche der Tragflächen angebracht sind,

(b) die Klappen federnd biegsam ausgebildet sind und

(c) die Klappen durch je eine Rückstellfeder in einer Ruhestellung gehalten werden, in welcher sie flach auf der Oberfläche der Tragfläche aufliegen.

Die Klappen bilden dabei keine Querruder sondern sind Spoilerklappen.

Normalerweise liegen die Klappen flach auf der Oberfläche der Tragfläche auf, passen sich durch ihre Biegsamkeit an diese an und beeinflussen das Profil nicht. Wenn das Stellzeug gegen die Wirkung der Rückstellfeder einen Zug auf die hintere Kante der Klappe ausübt, dann wird von der federnd biegsamen Klappe zunächst das hintere Ende hochgerollt. Es wird dadurch nicht sofort die gesamte Klappenfläche "ausgefahren" sondern nur ein kleiner Teil der Klappe, während der größere Teil der Klappe zunächst in Anlage an der Oberfläche der Tragfläche bleibt. Erst bei einem weiteren Betätigen des Stellzeugs wird dann die restliche Klappe nach oben geschwenkt.

Durch Ausstellen dieser Spoilerklappen kann die Geschwindigkeit des Hängegleiters vermindert und der Gleitbahnwinkel vergrößert werden. Beim Auftauchen eines Hindernisses kann der Hängegleiter schneller zur Erde gesteuert werden. Auch der Zielanflug wird erleichtert, da das Ziel nicht nur durch Kurvenflug, sondern auch durch Veränderung des Gleitbahnwinkels angesteuert werden kann. Eine solche Veränderung des Gleitbahnwinkels wird nicht durch eine Veränderung des Anstellwinkels über eine Gewichtsverlagerung des Flugzeugführers bewirkt.

Die Spoilerklappen sitzen an den Tragflächenenden, die sowieso nicht wesentlich zum Auftrieb des Hängegleiters beitragen. Infolgedessen werden die Flug- und Auftriebseigenschaften des Hängegleiters durch die Spoilerklappen nicht oder jedenfalls nicht nennenswert beeinflußt.

Wird nur eine der Spoilerklappen ausgestellt, erfolgt eine Abbremsung des Hängegleiters auf einer Seite. Dadurch kann eine enge Kurve geflogen werden. Diese Kurve braucht nicht durch eine Gewichtsverlagerung des Flugzeugführers und Neigung der Tragflächen eingeleitet zu werden. Dadurch wird die Manövrierbarkeit des Hängegleiters, insbesondere auch in Notsituationen, wesentlich verbessert. In einem Aufwind kann der Hängegleiter ohne Schräglage kreisen. Es steht dann die volle Fläche der Tragflächen für den Auftrieb zur Verfügung. Da die Spoilerklappen an den Enden der Tragflächen in maximalem Abstand vom Masseschwerpunkt sitzen, ergibt der auf die Spoilerklappen wirksame Luftwiderstand ein maximales Drehmoment um die Hochachse.

Im Falle eines drohenden Strömungsabrisses kann durch Ausstellen der Spoilerklappen ein Wirbel im Bereich der Tragflügelenden erzeugt werden, der einen Druckausgleich zwischen dem Unterdruck auf der Oberseite der Tragflügel und dem Überdruck auf der Unterseite entgegenwirkt. Dieser Druckausgleich kann dann jedenfalls nicht über die Tragflügelenden erfolgen.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

## Kurze Beschreibung der Zeichnungen

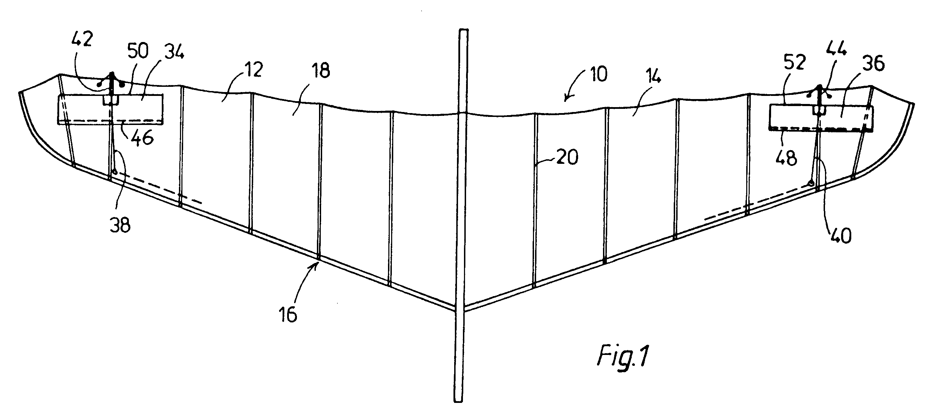

Fig. 1 ist eine Draufsicht auf einen Hängegleiter mit Spoilerklappen im Bereich der Tragflügelenden.

Fig. 2 ist eine Vorderansicht des Hängegleiters nach Fig. 1 mit mit ausgestellten Spoilerklappen.

Fig. 3 ist in vergrößertem Maßstab eine Draufsicht eines Tragflächenendes mit einer Spoilerklappe in deren Ruhestellung.

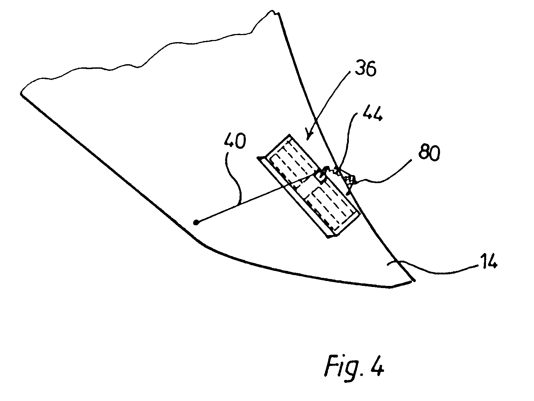

Fig. 4 ist eine perspektivische Darstellung eines Tragflächenendes mit einer ausgestellten, "gezogenen" Spoilerklappe.

## Bevorzugte Ausführung der Erfindung

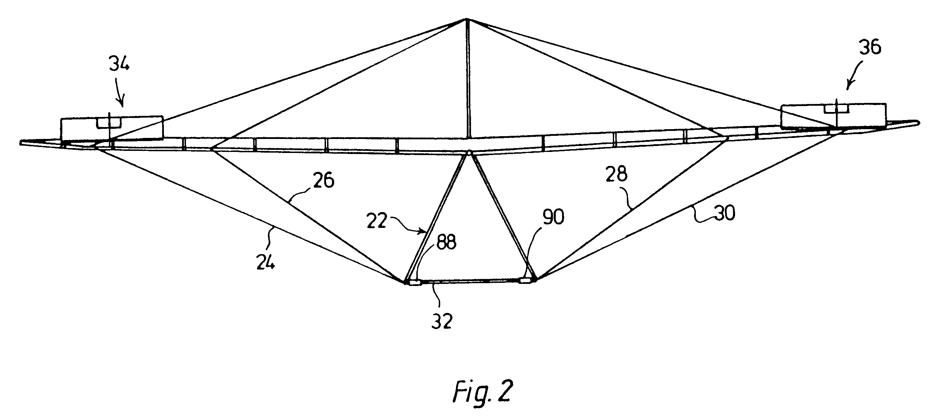

Mit 10 ist generell ein Hängegleiter bezeichnet. Der Hängegleiter 10 weist eine rechte Tragfläche 12 und eine linke Tragfläche 14 auf. Die Tragflächen 12 und 14 sind von einem leichten, auseinandernehmbaren Gestell 16 gebildet, das mit einer Stoffbespannung 18 versehen ist. Das Gestell weist insbesondere Verstärkungsrippen 20 auf, die in Taschen der Stoffbespannung gehalten sind und sich etwa in Flugrichtung erstrecken. Wie aus Fig. 2 ersichtlich ist, ist unter den Tragflächen 12, 14 ein Trapez angeordnet. Das Trapez 22 ist mit dem Gestell 16 der Tragflächen 12, 14 durch Stage 24, 26, 28, 30 und weitere verspannt, so daß eine im wesentlichen starre Struktur entsteht. In dem Trapez 22 hängt der Flugzeugführer. Er kann sein Gewicht auf einer Querstrebe 32 des Trapezes 22 abstützen und seinen Schwerpunkt relativ zu dieser nach vorn oder hinten und nach rechts oder links verlagern. Dadurch wird im üblichen Betrieb der Hängegleiter gesteuert. Das ist der übliche Aufbau eines Hängegleiters.

Bei dem hier dargestellten und beschriebenen Hängegleiter 10 sind nun im Bereich der Tragflügelenden Spoilerklappen 34 und 36 vorgesehen.

Die Spoilerklappen 34 und 36 sind unabhängig voneinander betätigbar. Zu diesem Zweck ist jede der Spoilerklappen 34 und 36 über einen Stellzug 38 bzw. 40 gegen die Wirkung einer Rückstellfeder 42 bzw.44 in eine Wirkstellung verschwenkbar.In der Wirkstellung stehen die Spoilerklappen im wesentlichen senkrecht zur Oberfläche der Tragflügel und im wesentlichen senkrecht zur Flugrichtung. Die Spoilerklappen 34 und 36 sind jeweils entlang einer quer zur Flugrichtung verlaufenden Längsseite 46 bzw. 48 an der Oberfläche der Tragfläche 12 bzw. 14 befestigt. Die Spoilerklappen 34 und 36 werden durch je eine der Rückstellfeden 42 bzw, 44 in einer Ruhestellung gehalten, in welcher sie flach auf der Oberfläche der Tragfläche 12 bzw. 14 aufliegen. Der Stellzug 38 bzw. 40 greift im Bereich derjenigen Längsseite 50 bzw. 52 der Spoilerklappe 34 bzw. 36 an, welche der an der Oberfläche der Tragfläche befestigten Längsseite 46 bzw. 48 gegenüberliegt.

Die Spoilerklappen 34 und 36 sind federndbiegsam ausgebildet. Dadurch wird sichergestellt, daß sich die Spoilerklappen in der Ruhestellung unter dem Einfluß der Rückstellfeder 42 bzw. 44 dicht an die Oberfläche der Tragflächen 12 bzw. 14 anschmiegen können und die aerodynamischen Verhältnisse nicht beeinflussen. Sie lassen sich so auch leicht handhaben, wenn der Hängegleiter demontiert ist und raumsparend verpackt werden soll.

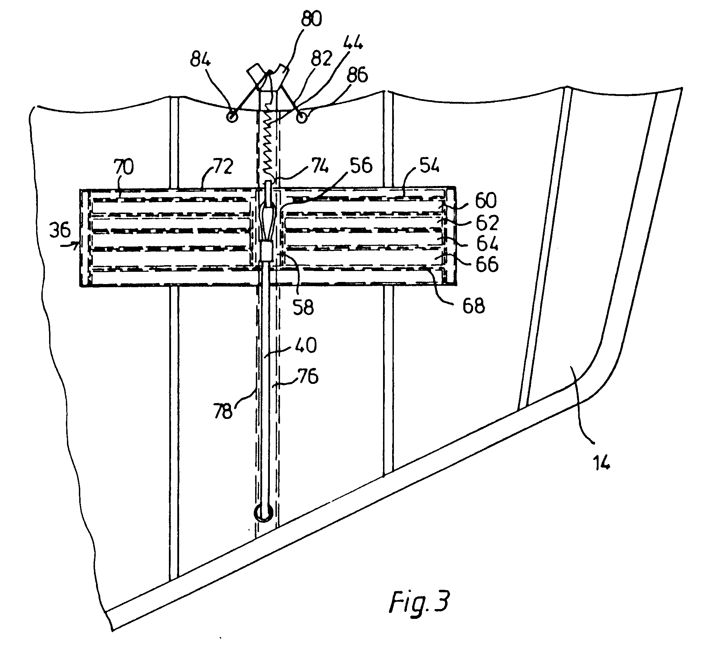

Wie am besten aus Fig.3 ersichtlich ist, weisen die Spoilerklappen Folien- oder Gewebeteile 54 auf. Diese Folien- oder Gewebeteile 54 bilden Taschen, wie noch beschrieben werden wird. In diesen Taschen sind elastisch nachgiebige Versteifungsglieder angeordnet. Bei dem dargestellten, bevorzugten Ausführungsbeispiel sind die Spoilerklappen 34 und 36 von je zwei langgestreckten, übereinanderliegenden Folien- oder Gewebeteilen 54 von rechteckiger Grundform gebildet. Jede Spoilerklappe ist längs einer Längsseite 46 bzw.48 an der Tragfläche 12 bzw. 14 des Hängegleiters befestigt. Durch die Folien- oder Gewebeteile 54 jede Spoilerklappe 34 oder 36 ist in dere Mitte eine sich senkrecht zu der Längsseite 46 bzw 48 über die Breite der Spoilerklappe 34 bzw. 36 erstreckende, schmale Tasche 56 gebildet.Die Tasche 56 nimmt eine Verstärkungsrippe 58 auf.Beiderseits der Verstärkungsrippe 58 sind in Längsrichtung der Spoilerklappe 34 bzw, 36 sich erstreckende Taschen 60, 62, 64 und 66 gebildet, welche Schaumstoffleisten 68 aufnehmen.Statt Schaumstoff kann auch ein anderes Material benutzt werden, das elastisch flexibel ist.

Eine Tasche 70 erstreckt sich entlang der gesamten Längsseite 50 bzw. 52 der Spoilerklappe 34 bzw. 36. Diese Längsseite 50 bzw. 52 liegt der Längsseite 46 bzw. 48 gegenüber, längs welcher die Spoilerklappe 34 bzw. 36 an dem Tragflügel 12 bzw. 14 befestigt ist. In dieser Tasche 70 ist eine sich über die gesamte Länge der Spoilerklappe 34 bzw. 36 erstreckende Verstärkungsrippe 72 angeordnet. Mit der besagten Verstärkungsrippe 72 ist ein gegenüber der Spoilerfläche vorstehender Arm 74 verbunden. An dem Arm 74 greift nach einer Seite hin die als Zugfeder ausgebildete Rückstellfeder 42 bzw.44 und nach der anderen Seite hin der Stellzug 38 bzw.40 an. Die Rückstellfeder ist bei einer bevorzugten Ausführung der Erfindung als Gummizug ausgebildet. Der Stellzug 38,40 ist zweckmäßigerweise ein Bowdenzug.

Wie am besten aus Fig.3 ersichtlich ist, ist die Spoilerklappe 36 an der Tragfläche 14 im Bereich einer Verstärkungsrippe 76 etwa symmetrisch und quer zu dieser angebracht. Die Verstärkungsrippe 76 sitzt - ähnlich wie die übrigen Verstärkungsrippen 20 des Gestells 16 in einer Tasche 78 des die Tragfläche 14 bildenden Gewebes und ragt mit einem gabelförmigen Ende 80 aus dieser Tasche 78 heraus. Die Verstärkungsrippe 76 wird durch einen Federzug oder Gummizug 82 in der Tasche 78 gehalten. Dieser Federzug ist zu beiden Seiten der Verstärkungsrippe 76 in Ösen 84,86 gehalten, die in dem Gewebe angebracht sind. Die Rückstellfeder 44 für die Spoilerklappe 36 ist einerseits an dem gabelförmigen Ende der Verstärkungsrippe 76 und andererseits an dem besagten Arm 74 an der Spoilerklappe angehängt.

Bei einer Betätigung des Stellzuges 40 wird zunächst die Tasche 70 mit der Verstärkungsrippe 72 aus der Oberfläche der Tragfläche 14 herausgeklappt. Dadurch wird zunächst eine kleine Klappenfläche " ausgefahren".Bei einem weiteren Betätigen des Stellzuges 40 wird dann die restliche Fläche der Spoilerklappe 36 nach oben geschwenkt.

Der Stellzug 38,40 jeder Spoilerklappe 34 bzw. 36 ist zunächst innerhalb der Tragfläche 12 bzw. 14 geführt und verläuft dann längs eines Stags 26 bzw. 28 zu dem Trapez 22. Dort ist jeder Stellzug 38 und 40 mit einer Hülse 88 bzw. 90 verbunden. Die Hülsen 88,90 sind auf der Querstrebe 32 des Trapezes des Hängegleiters 10 verschiebbar geführt. Die Spoilerklappen 34,36 können so von dem Flugzeugführer bequem betätigt werden.

**Patentansprüche**

1. Steuervorrichtung für Hängegleiter, bei welchem im Bereich der Tragflächenenden des Hängegleiters (10) Klappen (34,36) jeweils längs einer quer zur Flugrichtung verlaufenden vorderen Klappenlängsseite (46,48) schwenkbar an der Tragfläche (12,14) angebracht und über ein Stellzeug (38,40) verschwenkbar sind, das an der hinteren Längsseite der Klappe (34, 36) angreift,

   **dadurch gekennzeichnet, daß**

   (a) die Klappen (34,36) auf der Oberfläche der Tragflächen (12,14) angebracht sind,

   (b) die Klappen federnd biegsam ausgebildet sind und

(c) die Klappen durch je eine Rückstellfeder (42,44) in einer Ruhestellung gehalten werden, in welcher sie flach auf der Oberfläche der Tragfläche (12,14) aufliegen.

2. Steuervorrichtung nach Anspruch 1, **dadurch gekennzeichnet, daß** die Klappen (34,36) unabhängig voneinander betätigbar sind.

3. Steuervorrichtung nach Anspruch 1, **dadurch gekennzeichnet, daß**

(a) die Spoilerklappen (34, 36) Folien- oder Gewebeteile (54) aufweisen,

(b) diese Folien- oder Gewebeteile (54) Taschen bilden und

(c) in diesen Taschen elastisch nachgiebige Versteifungsglieder angeordnet sind.

4. Steuervorrichtung nach Anspruch 3, **dadurch gekennzeichnet, daß**

(a) die Spoilerklappen (34, 36) von je zwei langgestreckten übereinanderliegenden Folien- oder Gewebeteilen (54) von rechteckiger Grundform gebildet sind,

(b) jede Spoilerklappe (34, 36) längs einer Klappenlängsseite (46, 48) an der Tragfläche (12, 14) des Hängegleiters (10) befestigt ist,

(c) durch die Folien- oder Gewebeteile (54) jeder Spoilerklappe in der Mitte eine sich senkrecht zu der besagten Klappenlängsseite (46, 48) über die Breite der Spoilerklappe (34, 36) erstreckende schmale Tasche (56) gebildet ist, welche eine Verstärkungsrippe (58) aufnimmt,

(d) beiderseits der besagten Verstärkungsrippe (58) in Längsrichtung der Spoilerklappe sich erstreckende Taschen (60, 62, 64, 66) gebildet sind, welche Schaumstoffleisten (68) aufnehmen.

5. Steuervorrichtung nach Anspruch 4, **dadurch gekennzeichnet, daß**

(a) eine Tasche (70) entlang derjenigen Längsseite (50, 52) der Spoilerklappe (34, 36) gebildet ist, die der Längsseite (46, 48) gegenüberliegt, längs welcher die Spoilerklappe (34, 36) an dem Tragflügel (12, 14) befestigt ist,

(b) in dieser Tasche (70) eine sich über die gesamte Länge der Spoilerklappe (34, 36) erstreckende Verstärkungsrippe (72) angeordnet ist.

6. Steuervorrichtung nach Anspruch 5, **dadurch gekennzeichnet, daß**

(a) mit der besagten Verstärkungsrippe (72) ein gegenüber der Spoilerfläche vorstehender Arm (74) verbunden ist und

(b) an dem Arm (74) nach einer Seite hin die als Zugfeder ausgebildete Rückstellfeder (42, 44) und nach der anderen Seite hin der Stellzug (38, 40) angreift.

7. Steuervorrichtung nach Anspruch 6, **dadurch gekennzeichnet, daß**

(a) die Spoilerklappe (34, 36) an der Tragfläche (12, 14) im Bereich einer Verstärkungsrippe (76) etwa symmetrisch und quer zu dieser angebracht ist,

(b) die Verstärkungsrippe (76) in einer Tasche (78) des die Tragfläche (12, 14) bildenden Gewebes sitzt und mit einem gabelförmigen Ende (80) aus dieser Tasche (78) herausragt, wobei die Verstärkungsrippe (76) in Ösen (84, 86) gehalten ist, die in dem Gewebe vorgesehen sind.

(c) die Rückstellfeder (44) für die Spoilerklappe (34, 36) einerseits an dem gabelförmigen Ende (80) der Verstärkungsrippe (76) und andererseits an dem besagten Arm (74) an der Spoilerklappe (34, 36) angehängt ist.

8. Steuervorrichtung nach Anspruch 7, **dadurch gekennzeichnet, daß** der Stellzug (38, 40) jeder Spoilerklappe (34, 36) mit einer Hülse (88, 90) verbunden ist, die auf der Querstrebe (32) des Trapezes der Hängegleiter (10) verschiebbar geführt ist.

## Claims

1. Control device for hang gliders, in which, in the area of the wing ends of the hang glider (10), flaps (34, 36) are pivotably attached to the wing (12, 14) along a front flap long side (46, 48) extending transversely to the flight direction, and pivotable through an actuator (38, 40) which acts upon the rear long side of the flap (34, 36),

   **characterized in that**

   (a) the flaps (34, 36) are attached on the surface of the wings (12, 14),

   (b) the flaps are resiliently flexible and

   (c) the flaps are held in an inoperative position by a pull-back spring (42, 44), in which inoperative position they flatly engage the surface of the wing (12, 14).

2. Control device as set forth in claim 1, **characterized in that** the flaps (34, 36) are adapted to be actuated independently of each other.

3. Control device as set forth in claim 1, **characterized in that**

   (a) the spoiler flaps (34, 36) have foil or textile elements (54),

   (b) these foil or textile elements (54) form pockets and

   (c) elastically flexible reinforcing elements are arranged in these pockets.

4. Control device as set forth in claim 3, **characterized in that**

   (a) the spoiler flaps (34, 36) are formed by two generally rectangular elongated foil or textile elements (54) lying on top of each other,

   (b) each spoiler flap (34, 36) is attached along one flap long side (46, 48) on the wing (12, 14) of the hang glider (10),

   (c) a narrow pocket (56) extending perpendicularly to said flap long side (46, 48) over the breadth of the spoiler flap (34, 36) and accommodating a reinforcing rib (58) is formed in the center by the foil or textile elements (54) of each spoiler flap,

   (d) pockets (60, 62, 64, 66) are formed which extend in the longitudinal direction of the spoiler flap on both sides of said reinforcing rib (58) and which accommodate ledges (68) of cellular plastic.

5. Control device as set forth in claim 4, **characterized in that**

   (a) a pocket (70) is formed along the long side (50, 52) of the spoiler flap (34, 36), which long side (50, 52) is opposite the long side (46, 48) along which the spoiler flap (34, 36) is attached to the wing (12, 14),

   (b) a reinforcing rib (72) extending over the total length of the spoiler flap (34, 36) is arranged in this pocket (70).

6. Control device is set forth in claim 5, **characterized in that**

   (a) an arm (74) projecting from the spoiler surface is connected to said reinforcing rib (72) and

   (b) the pull-back spring (42, 44) formed as tension spring acts upon the arm (74) toward one side and the actuator (38, 40) acts upon the arm (74) toward the other side.

7. Control device as set forth in claim 6, **characterized in that**

   (a) the spoiler flap (34, 36) is attached to the wing (12, 14) in the area of a reinforcing rib (76) approximately symmetrically and transversely thereto,

(b) the reinforcing rib (76) is located in a pocket (78) of the textile forming the wing (12, 14) and extends out of this pocket (78) with a bifurcated end (80), the reinforcing rib (76) being held in eyelets (84, 86) which are provided in the textile,

(c) the pull-back spring (44) for the spoiler flap (34, 36) is appended, at one end, at the bifurcated end (80) of the reinforcing rib (76) and, at the other end, at said arm (74) at the spoiler flap (34, 36).

8. Control device as set forth in claim 7, **characterized in that** the actuator (38, 40) of each spoiler flap (34, 36) is connected to a sleeve (88, 90) which is slidably guided on the cross-strut (32) of the trapeze of the hang glider (10).

**Revendications**

1. Dispositif de commande pour des planeurs pendants, dans lequel dans la zone des extrémités d'aile du planeur pendant (10), des abattants (34, 36) sont montés sur l'aile (12,14) de sorte à pouvoir pivoter respectivement le long du grand côté avant de l'abattant (46,48) s'étendant transversalement à la direction de vol, et sont pivotables par un vérin (38,40) agissant sur le grand côté arrière de l'abattant (34,36),

   **caractérisé par le fait que**
   (a) les abattants (34,36) sont montés sur la surface des ailes (12,14),
   (b) les abattants sont élastiquement fexibles, et
   (c) les abattants sont tenu par un ressort de rappel (42,44) à la fois dans une position d'arrêt dans laquelle ils sont couchés planement sur la surface de l'aile (12,14).

2. Dispositif de commande selon la revendication 1, **caractérisé par le fait que** les abattants (34,36) sont actionnables indépendemment l'un de l'autre.

3. Dispositif de commande selon la revendication 1, **caratérisé par le fait que**
   (a) les abattants déporteurs (34,36) présentent des éléments de feuille ou de tissu (54),
   (b) ces éléments de feuille ou de tissu (54) forment des poches, et
   (c) des éléments de renforcement élastiquement flexibles sont disposés dans ces poches.

4. Dispositif de commande selon la revendication 3, **caractérise par le fait que**
   (a) les abattants déporteurs (34,36) sont respectivement formés par deux éléments de feuille ou de tissu allongés généralement réctangulaires (54) disposés l'un sur l'autre,
   (b) chaque abattant déporteur (34,36) est fixé le long d'un grand côté d'abattant (46,48) sur l'ail (12,14) du planeur pendant (10),
   (c) une poche étroite s'étendant perpendiculairement audit grand côté d'abattant (46,48) sur la largeur de l'abattant déporteur (34,36) et recevant une nervure de renforcement (58) est formée au centre par les éléments de feuille ou de tissu (54) de chaque abattant déporteur,
   (d) des poches (60,62,64,66) sont formées, qui s'étendent des deux côtés de ladite nervure de renforcement (58) dans la direction longitudinale de l'abattant déporteur et qui recoivent des barres de produit alvéolaire (68).

5. Dispositif de commande selon la revendication 4, **caractérisé par le fait que**
   (a) une poche (70) est formée le long du grand côté (50,52) de l'abattant déporteur (34,36), qui est en face du grand côté (46,48) le long duquel l'abattant déporteur (34,36) est fixé à l'aile (12,14),
   (b) une nervure de renforcement (72) s'étendant sur toute la longueur de l'abattant déporteur (34,36) est disposée dans cette poche (70).

6. Dispositif de commande selon la revendication 5, **caractérisé par le fait que**
   (a) un bras (74) saillant de la surface de déporteur est relié à ladite nervure de renforcement (72), et
   (b) le ressort de rappel (42,44) formé comme ressort de tension agit sur le bras (74) vers un côté et le vérin (38,40) agit sur le bras (74) vers l'autre côté.

7. Dispositif de commande selon la revendication 6, **caractérisé par le fait que**
   (a) l'abattant départeur (34,36) est monté sur l'aile (12,14) dans la zone d'une nervure de renforcement (76) approximativement symétriquement et transversalement à celle-ci,
   (b) la nervure de renforcement (76) est située dans une poche (78) du tissu formant l'aile (12,14) et saillant bars de cette poche avec une extrémité bifurquée (80), la nervure de renforcement (76) étant tenue dans des oeillets (84,86) prévus dans le tissu,
(c) le ressort de rappel (44) pour l'abattant départeur (34,36) est suspendu sur un côté à l'extrémité bifurquée (80) de la nervure de renforcement (76) et sur l'autre côté audit bras (74) à l'abattant déporteur (34,36).

8. Dispositif de commande selon la revendication 7, **caractérisé par le fait que** le vérin (38,40) de chaque abattant déporteur (34,36) est relié à un manchon (88,90) guidé de sorte à pouvoir être déplacé sur le renforcement diagonal (32) du trapèze du planeur pendant (10).

*Fig.1*

EP 0 346 323 B1

*Fig. 2*

EP 0 346 323 B1

Fig. 3

EP 0 346 323 B1

*Fig. 4*